# EUROPÄISCHE PATENTSCHRIFT

(11) **EP 0 539 879 B1**
(45) Veröffentlichungstag und Bekanntmachung des Hinweises auf die Patenterteilung: **28.12.1994**
(21) Anmeldenummer: 92118154.1
(22) Anmeldetag: 23.10.1992
(51) Int. Cl.: A21B 3/13, A47J 37/01

(54) **Springform**
Baking mould
Moule de boulangerie

(30) Priorität: 31.10.1991 DE 4135949
(43) Veröffentlichungstag der Anmeldung: 05.05.1993
(73) Patentinhaber: W.F. KAISER U. CO. GMBH, D-65570 Diez/Lahn (DE)
(72) Erfinder: Sondermann, Karl-Ferdinand, Dipl.-Kfm., W-6254 Elz (DE)
(74) Vertreter: Vollbach, Hans, Dipl.-Ing.

(56) Entgegenhaltungen:
- EP-A- 0 285 988
- DD-A- 94 967
- DE-C- 530 287
- DE-U- 9 010 519

## Beschreibung

Die Erfindung betrifft eine Springform, bestehend aus einem Formboden und einem diesen einspannenden Formrand mit Spannverschluß, mit einer am Formboden in dessen Umfangsbereich angeordneten umlaufenden Rille, in die der Formrand mit seinem einen Stützbördel aufweisenden Fuß einführbar ist, wobei der Rillenboden gegenüber der das Backgut tragenden ebenen Bodenfläche des Formbodens nach unten versetzt ist und die die Rille innenseitig begrenzende, vom Rillenboden zur Bodenfläche aufragende Rillenschulter eine vom Formrand umschlossene Formrand-Anlagefläche bildet, während die die Rillenseite außenseitig begrenzende Rillenschulter einen schräg nach außen und nach oben aufragenden Bodenrand bildet, dessen Scheitel in Höhe der Oberseite der Bodenfläche oder tiefer als diese liegt.

Die zu Backzwecken gebräuchlichen Springformen weisen an ihrem Formrand einen Spannverschluß, im allgemeinen mit einem schwenkbar gelagerten Spannhebel auf, durch dessen Handbetätigung der als Überlappungsring ausgebildete Formrand um den Formboden gespannt werden kann, so daß dieser im Formrand festgelegt wird. Der Formboden ist am Umfang nach innen umgebördelt, wobei er mit diesem Innenbördel in einer am Fuß des Formrandes angeordneten Sicke form- und kraftschlüssig gehalten wird.

Obwohl sich mit den üblichen Spannhebelverschlüssen im allgemeinen verhältnismäßig große Spannkräfte aufbringen lassen, ist es bei den gebräuchlichen Springformen nicht möglich, den Formboden so im Formrand einzuspannen, daß eine absolute Dichtigkeit der Form gegeben ist. Dies hat seine Ursache vor allem darin, daß der Formrand als Spannring ausgebildet ist, dessen beide Enden sich überlappen und im Überlappungsbereich aneinander führen. Es ergeben sich daher im Überlappungsbereich zwangsläufig undichte Stellen, durch die hindurch beim Backvorgang heißes Fett oder auch Saft u.dgl. aus der Form in den Herd abtropfen kann, was zu unerwünschten Herdverschmutzungen führt.

Aus der DD-A-94 967 ist seit längerem eine Springform bekannt, bei welcher der Formboden bei entferntem Formrand zugleich als Tortenplatte zum Servieren der fertigen Torte od. dgl. verwendet werden kann, so daß sich ein Umsetzen der fertigen Torte vom Formboden auf eine gesonderte Tortenplatte erübrigt. Der Formboden weist an seinem Umfang eine verhältnismäßig tiefe Auffangrille auf, die beim Backvorgang oder beim Öffnen und Abheben des Formrandes auslaufendes Fett, Obstsäfte u.dgl. auffängt, so daß es beim Backvorgang zu keinen Herdverschmutzungen und nach erfolgtem Backvorgang beim Absetzen der Springform auf einem Tisch zu keinen Tischverschmutzungen kommen kann. Auch werden von der Auffangrille Krümel oder sonstige Kuchenbestandteile aufgefangen, wenn der Kuchen auf dem Formboden in Stücke geschnitten oder die Kuchenstücke mit Hilfe eines Tortenhebers od.dgl. vom Formboden abgehoben werden. Mit der bekannten Springform ergeben sich somit verbesserte Gebrauchseigenschaften der Form.

Die bekannte Springform ist allerdings nicht frei von Nachteilen. Der als Tortenplatte ausgebildete Springformboden besteht aus einem dickwandigen Teil von verhältnismäßig verwickelter Gestaltung. Der Formrand weist am Fuß einen nach innen gerichteten Randwulst auf, mit dem er im Spannzustand in eine Hinterschneidung an der Innenschulter der Auffangrille des Formbodens einfaßt. Diese Hinterschneidung ist fertigungstechnisch schwer herzustellen und erschwert auch das Reinigen des Formbodens bzw. seiner Auffangrille von darin aufgefangenen Fett- und Saftbestandteilen u.dgl. Häufig stellt sich im Gebrauch der Springformen die Forderung, den fertigen und ausgeformten Kuchen, bevor er in Stücke zerteilt wird, vom Formboden abzunehmen. Dies bereitet bei der bekannten Springform Schwierigkeiten, da der äußere Bodenrand des Formbodens über die Oberseite der das Backgut tragenden Bodenfläche des Formbodens weit hochgezogen ist. Auch das Abheben der Kuchenstücke mittels eines Tortenhebers bereitet aufgrund des weit aufragenden Bodenrandes Probleme. Auch bestehen Dichtungsprobleme, da es an den Überlappungsstellen des spannbaren Formrandes zu einer ausgeprägten Spaltbildung kommt, so daß bereits beim Einfüllen des Teiges in die geschlossene Springform diese in die Spalte einfließen kann.

Die vorgenannten Nachteile bestehen zumindest teilweise auch bei der aus dem DE-U-90 10 519 bekannten Springform der gattungsgemäße Art, bei der der als Torten- bzw. Servierplatte ausgebildete Formboden ebenfalls mit einer eine Auffangrille bildenden umlaufenden Rille versehen ist, in die der spannbare Formrand mit seinem Fuß einfaßt, der hier mit einem nach innen gerichteten Stützbördel versehen ist. Die Innenschulter der Auffangrille weist eine nach innen gedrückte umlaufende Sicke für den Eingriff des Stützbördels auf. Oberhalb des Stützbördels ist am Formrand eine nach innen gerichtete umlaufende Sicke angeformt, die die das Backgut tragende Bodenfläche des Formbodens am Umfang übergreift. Die Sicke ragt nach innen in den Formraum und beeinträchtigt das Ausformen des Backguts. Beim Ausformen des fertigen, ggf. noch heißen Backguts kann es zu einer Beschädigung desselben kommen. Außerdem ist die Abdichtung unzureichend, da die genannte Sicke des Formrandes im wesentlichen nur in Linienberührung mit dem Umfang der das Backgut tragenden Bodenfläche des Formbodens steht. Flüssigstoffe aus dem Backgut können daher vor allem im Überlappungsbereich des Formrandes zu dem Stützbördel hin und in diesen gelangen. Das Reinigen des Stützbördels und der durch die Sicke nach innen eingezogenen Innenschulter der Auffangrille von anhaftenden Ablagerungen ist problematisch.

Ausgehend von der Springform der vorgenannten, gattungsgemäßen Art liegt der Erfindung vor allem die Aufgabe zugrunde, diese Springform so auszugestalten, daß sich weitere Gebrauchsvorteile bezüglich der Dichtigkeit der Form, ihre Handhabung und Reinigung ergeben und auch die Möglichkeit besteht, den als Kuchen- oder Servierplatte verwendbaren Formboden fertigungstechnisch problemlos aus einem einfachen Blechformteil herzustellen.

Die vorgenannte Aufgabe wird erfindungsgemäß dadurch gelöst, daß der Stützbördel am Fuß des Formrandes als eine gegenüber diesem nach außen gerichtete Umbördelung ausgebildet ist, daß die Bodenfläche an ihrem Umfang über eine nach Art einer nach außen gedrückten Sicke ausgebildete Rundung in die vertikal stehende innenseitige Schulter der Rille übergeht, und daß der Formrand oberhalb seines Stützbördels eine der Rundung angepaßte, sich im Spannzustand des Formrandes dichtend gegen die Rundung legende und anschmiegende Sicke aufweist.

Da bei der erfindungsgemäßen Springform der spannbare Formrand an seinem Fuß als Stützbördel einen Außenbördel trägt, kann die bei der bekannten Springform an der Innenschulter der Auffangrille des Formbodens angeformte Sicke entfallen und folglich diese Innenschulter als steilstehende Schulter ausgeführt werden. Die eine Auffangrille bildende Rille am Formboden kann daher eine verhältnismäßig einfache Gestaltung erhalten, so daß sie sich auch leicht von den aufgefangenen und mehr oder weniger fest anhaftenden Ablagerungen reinigen läßt. Auch können während des Backvorgangs keine flüssigen Bestandteile, wie heißes Fett, Obstsäfte u.dgl., die durch Spaltbildung an der Überlappung des Formrandes nach außen zur Auffangrille hin fließen, in den Außenbördel gelangen, wenn dieser, wie dies aus hygienischen Gründen bzw. aus Gründen der Reinigung geboten ist, nicht vollständig geschlossen ist. Dadurch, daß der Formrand oberhalb seines Stützbördels eine nach außen gerichtete Sicke aufweist, die sich im Spannzustand des Formrandes dichtend gegen die Rundung am Übergang zwischen der das Backgut tragenden Bodenfläche und der Innenschulter der Auffangrille legt und der Rundung angepaßt ist, wird eine wesentlich verbesserte Dichtwirkung erzielt, so daß es beim Einfüllen des Teiges in die Form wie auch beim Backvorgang zu keinem nennenswerten Einfließen des Teiges bzw. der fließfähigen Bestandteile in den Spaltraum zwischen Formboden und Formrand kommen kann. Die genannte Sickenabdichtung läßt sich ohne besonderen Fertigungsaufwand erfindungsgemäß so gestalten, daß die beim Betätigen des Spannverschlusses auftretenden Spannkräfte zumindest weitgehend zur Anpressung des Formrandes gegen den Formboden im Sickenbereich wirksam werden, so daß sich eine besonders gute Abdichtung erreichen läßt. Die Sickenabdichtung liegt unmittelbar an der Übergangsstelle zwischen der Bodenfläche des Formbodens und dem Formrand. Die Sicke springt dabei nicht in den das Backgut aufnehmenden Formraum nach innen vor, so daß auch das Ausformen des fertigen Backgutes hierdurch nicht behindert wird. Der als Kuchen- bzw. Servierplatte verwendbare Formboden läßt sich fertigungstechnisch problemlos aus einem einfachen Blechformteil fertigen und ermöglicht auch eine leichte Reinigung selbst bei fest haftenden Ablagerungen im Bereich der Auffangrille.

Bei der erfindungsgemäßen Springform bildet der genannte Außenbördel des Formrandes im übrigen einen diesen aussteifenden Stützbördel, mit dem sich der Formrand auf dem Rillenboden abstützen kann. Beim Schließen der Form braucht der ungespannte Formrand lediglich in die Rille eingesetzt zu werden, so daß er sich mit dem Stützbördel auf dem Rillenboden abstützt. Durch Betätigen des Spannverschlusses wird dann der Formrand unter Verbleib in seiner Abstützposition um die Bodenfläche des Formbodens gespannt, ohne daß hierbei noch ein besonderes Ausrichten des Formrandes gegenüber dem Formboden erforderlich ist. Die Auffangrille am Formboden kann verhältnismäßig flach ausgeführt werden, was auch fertigungstechnische Vorteile hat. Da der die Außenschulter der Rille bildende schräggestellte Bodenrand des Formbodens, wie bekannt, höchstens soweit hochgezogen ist, daß seine oberste Stelle, also sein Scheitel, nicht oberhalb der das Backgut tragenden Bodenfläche des Formbodens liegt, vorzugsweise um ein geringes (z.B. 1-3 mm) tiefer liegt als die Bodenfläche. Infolgedessen ist es möglich, den fertigen Kuchen, bevor er in Stücke geschnitten wird, seitlich über den schräg gestellten Bodenrand hinweg von der ebenen Bodenfläche des Formbodens abzuschieben. Der aufragende Bodenrand bildet also kein störendes Hindernis für das seitliche Abschieben des fertigen Kuchens von der Bodenfläche des Formbodens.

Es empfiehlt sich, an dem genannten schrägstehenden Bodenrand des Formbodens, d.h. am freien oberen Ende des Bodenrandes eine nach unten gerichtete Umbördelung vorzusehen, die den Formboden im Umfangsbereich aussteift und einen Griffbördel bilden kann, wobei diese Umbördelung zweckmäßig als offene Bördelrolle ausgebildet wird, was ebenfalls Reinigungsvorteile hat. Die Freihöhe dieses Griffbördels über der vom Rillenboden gebildeten Auflagefläche des Formbodens sollte so groß sein, daß zum Anheben und Tragen des Formbodens ausreichend Raum zur Verfügung steht, um die Fingerkuppen der Hände unter den Griffbördel zu bringen. Im allgemeinen genügt es, wenn die genannte Freihöhe etwa gleich 1/2 bis 3/4 der Tiefe der Rille beträgt, d.h. bei bevorzugter Ausgestaltung des Springformbodens etwa 6-10 mm beträgt.

Die innenliegende, vertikalstehende Rillenschulter des Formbodens geht zweckmäßig über eine Rundung in den horizontalen Rillenboden über, wobei der Rillenboden eine Breite hat, die größer ist als der Durchmesser des genannten Stützbördels, der sich im Spannzustand des Formrandes dieser Rundung eng anschmiegt. Ferner empfiehlt es sich, die Anordnung so zu treffen, daß der Bodenrand des Formbodens vom Rillenboden zum Scheitel hin geradlinig unter einem Winkel von etwa 20° bis 30°, vorzugsweise etwa 25°, ansteigt. Die am Formboden angeformte Rille weist also im Scheitelbereich eine verhältnismäßig große Öffnungsweite auf, die um das 2- bis 3-fache größer sein kann als die Rillentiefe. Damit ergibt sich auch eine im Auffangquerschnitt ausreichend groß bemessene Auffangrille, die sich auch leicht reinigen läßt.

Der zugleich als Servierplatte verwendbare Formboden nach der Erfindung wird, wie erwähnt, vorzugsweise als einfaches Blechformteil gefertigt, zweckmäßig aus einem Blech, dessen Dicke zwischen 0,5 und 0,8 mm liegt. Der erfindungsgemäße Formboden kann mit besonderem Vorteil aus rostfreiem Edelstahl bzw. aus Edelstahlblech gefertigt werden, wobei der Edelstahl-Formboden an seiner Sichtseite poliert ist, so daß er ein formschönes Aussehen erhält, was im Hinblick auf seine Verwendung als Servierplatte vorteilhaft ist. Außerdem unterliegt der Edelstahl-Formboden im Gebrauch keinem Rostangriff, so daß seine Gebrauchsdauer erheblich verlängert wird. Es hat sich gezeigt, daß ein Edelstahlboden an sich unzureichende Backeigenschaften aufweist, da die Unterhitze weitgehend von der Edelstahl-Unterseite des Formbodens reflektiert wird. Dieser Nachteil läßt sich dadurch beheben, daß der Edelstahl-Formboden der erfindungsgemäßen Springform auf der Unterseite seiner Bodenfläche eine Beschichtung aus einem dunkelfarbigen hochhitzebeständigen Beschichtungsstoff erhält, wie vor allem aus einem temperaturbeständigen polymeren Beschichtungssystem, wie sie auch bei Backformen zur Anwendung kommen. Auf der dem Backgut zugewandten Oberseite bleibt dagegen der Edelstahl-Formboden unbeschichtet.

Andererseits kann der erfindungsgemäß Formboden aber auch aus einfachem Stahlblech gefertigt werden, das dann eine Beschichtung der herkömmlichen Art erhalten kann, um Rostbildung zu vermeiden und zweckmäßig auch eine gewisse Antihafteigenschaft zu erreichen. Auch besteht die Möglichkeit, den Formboden mit einer Emaillebeschichtung zu versehen.

Die Erfindung wird nachfolgend im Zusammenhang mit dem in der Zeichnung gezeigten Ausführungsbeispiel näher erläutert. In der Zeichnung zeigen:
- Fig. 1: eine erfindungsgemäße Springform in Seitenansicht;
- Fig. 2: den in Fig. 1 mit II bezeichneten Ausschnitt der Springform im Vertikal schnitt und in starker Vergrößerung;
- Fig. 3: eine Draufsicht auf die Unterseite des Formbodens der Springform nach den Fig. 1 und 2.

Die dargestellte Springform 1 besteht aus dem Formboden 2 und dem Formrand 3, der mit einem Spannverschluß 4 versehen ist. Der Formrand 3 besteht, wie bekannt, aus einem Spann- bzw. Spreizring, dessen Enden sich im Bereich des Spannverschlusses 4 überlappen und in Spannrichtung aneinander führen. Für den Spannverschluß 4 kann ein herkömmlicher Spannverschluß mit Spannhebel 5 verwendet werden.

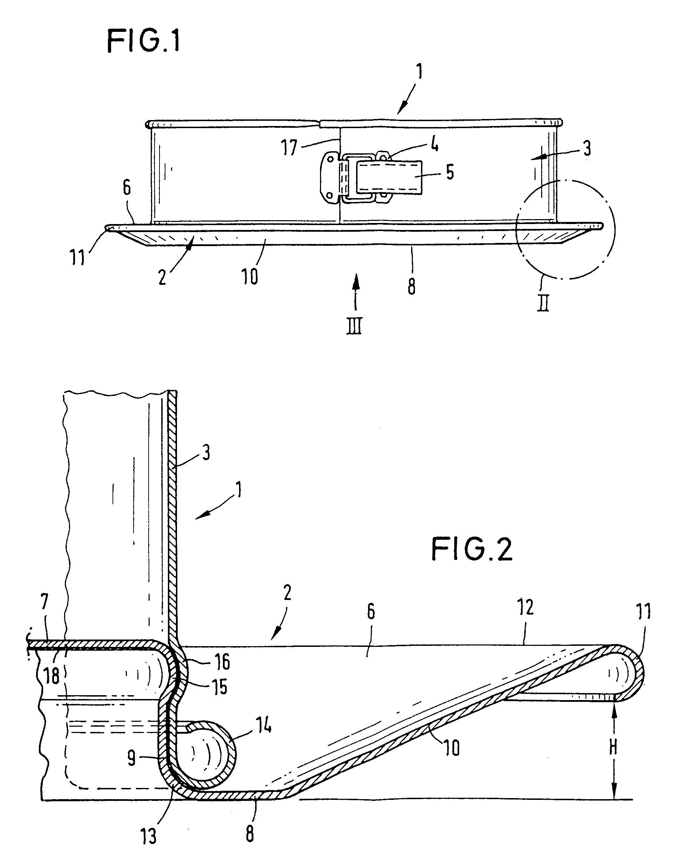

Der aus Blech gefertigte kreisrunde Formboden 2 hat einen größeren Durchmesser als der ebenfalls aus Blech gefertigte Formrand 3, wenn dieser mit Hilfe seines Spannverschlusses 4 am Formboden 2 festgelegt ist. Am Formboden 2 ist in dessen Umfangsbereich eine rundumlaufende Rille 6 einstückig angeformt, in die der Formrand 3 mit seinem Fuß einführbar ist. Die Rille 6 umschließt die eigentliche Bodenfläche 7 des Formbodens 2, die das Backgut bzw. den Teig trägt. Mit 8 ist der horizontale Rillenboden bezeichnet, der die eigentliche Standfläche der Springform 1 bildet und der gegenüber der das Backgut tragenden ebenen Bodenfläche 7 nach unten versetzt ist. Die innen liegende Rillenschulter 9 ist etwa vertikal stehend angeformt und bildet eine umlaufende Anlagefläche für den in die Rille 6 einfassenden Fuß des geschlossenen Formrandes 3. Die außen liegende Rillenschulter 10 bildet einen vom Rillenboden 8 schräg nach außen und nach oben ansteigenden Bodenrand. Der schrägstehende Bodenrand 10 weist an seinem freien oberen Ende eine nach unten gerichtete Umbördelung 11 auf, die, wie Fig. 2 zeigt, als offene Bördelrolle ausgebildet ist und einen Griffbördel bildet. Der Griffbördel 11 ist als Halb- oder etwa Dreiviertelbördel ausgeführt. Die oben liegende Scheitellinie 12 des von der außen liegenden Schulterfläche gebildeten Bodenrandes 10 ragt nicht über die Oberseite der Bodenfläche 7 hinaus. Sie liegt etwa in Höhe der Oberseite der Bodenfläche 7 oder geringfügig, z.B. 1 bis 3 mm darunter. Die Freihöhe H des Griffbördels 11 über der vom Rillenboden 8 gebildeten Auflage- oder Standfläche des Formbodens 2 ist etwa gleich 1/2 bis 3/4 der Tiefe der Rille 6, d.h. des Abstandes des Rillenbodens 8 von der Scheitellinie 12. Die Freihöhe H ist ausreichend groß, um zum Anheben und Tragen der Springform bzw. des Springformbodens 2 die Fingerspitzen unter den Griffbördel 11 zu legen, wenn sich der Formboden auf einer Unterlage, z.B. auf einem Tisch befindet.

Die innere, vertikal stehende Rillenschulter 9 geht über eine Rundung 13 in den horizontalen Rillenboden 8 über. Der Formrand 3 weist an seinem Fuß eine nach außen gerichtete Umbördelung auf, die einen Stützbördel 14 bildet, mit dem sich der Formrand 3 auf dem Boden 8 der Rille 6 abstützen kann. Der Stützbördel 14 schmiegt sich der Rundung 13 eng an, wenn der Spannverschluß 4 des Formrandes 3 geschlossen ist. Der Rillenboden 8 weist im übrigen eine Breite auf, die größer ist als der Durchmesser des Stützbördels 14.

Die Bodenfläche 7 des Formbodens 2 geht umfangsseitig über eine Rundung in die etwa vertikal stehende Rillenschulter 9 über, wobei diese Rundung als eine nach außen gedrückte Sicke 15 ausgeführt ist. Der Formrand 3 weist oberhalb des Stützbördels 14 ebenfalls eine nach außen gedrückte rundumlaufende Sicke 16 auf, die sich der Sicke 15 eng anschmiegt und mit der sich der Formrand 3 im Spannzustand gegen die Sicke 15 flächig anlegt, wodurch eine rundumlaufende Dichtung zwischen der Bodenfläche 7 und dem aufragenden Formrand 3 gebildet wird.

Fig. 2 zeigt, daß der Bodenrand 10 vom Rillenboden 8 zum Scheitel 12 hin geradlinig ansteigt, und zwar unter einem Winkel von etwa 20 bis 30°, vorzugsweise etwa 25°. Damit ergibt sich auch eine verhältnismäßig große Öffnungsweite der Rille 6.

Da die Scheitellinie 12 des Bodenrandes 10 nicht höher liegt als die Oberseite der Bodenfläche 7, kann nach Entfernen des Formrandes 3 ein auf der Bodenfläche 7 ruhender fertiger Kuchen seitlich über die Scheitellinie 12 hinweg von der Bodenfläche 7 abgeschoben werden. Es ist aber auch möglich, den fertigen Kuchen auf dem Formboden in Stücke zu schneiden, wobei die tiefliegende Scheitellinie 12 des Bodenrandes 12 auch den Schneidvorgang sowie das Abheben der Kuchenstücke von der Bodenfläche 7 mit Hilfe eines Tortenhebers od.dgl. erleichtert.

Da an der in Fig. 1 bei 17 angedeuteten Überlappungsnaht zwischen den sich übergreifenden Enden des spannbaren Formrandes 3 unvermeidlich ein, wenn auch enger, Spalt vorhanden ist, können beim Backvorgang heißflüssiges Fett, Obstsäfte u.dgl. durch den Spalt hindurch, der zwischen den Anlageflächen des Formrandes 3 und der Rillenschulter 9 vorhanden ist, aus der Form nach unten ablaufen. Diese ablaufenden Flüssigstoffe werden in der Rille 6 aufgefangen, die somit eine Auffangrille bildet. Auch beim Schneiden des fertigen, ausgeformten Kuchens auf der Bodenfläche 7 in Stücke können sich Kuchenteile lösen, die ebenfalls in der Rille 6 aufgefangen werden. Gleiches gilt für Kuchenbestandteile, die sich beim Ausformen des fertigen, gegebenenfalls noch warmen Kuchens lösen. Aus der geschlossenen Form etwa auslaufende Flüssigbestandteile (heißes Fett, Obstsäfte u.dgl.) können nicht in den Stützbördel 14 eindringen, auch dann nicht, wenn dieser, wie in Fig. 2 gezeigt, zu Reinigungszwecken nicht vollständig geschlossen ist. Im übrigen läßt sich die verhältnismäßig flache und im Scheitelbereich 12 weit offene Rille 6 leicht reinigen.

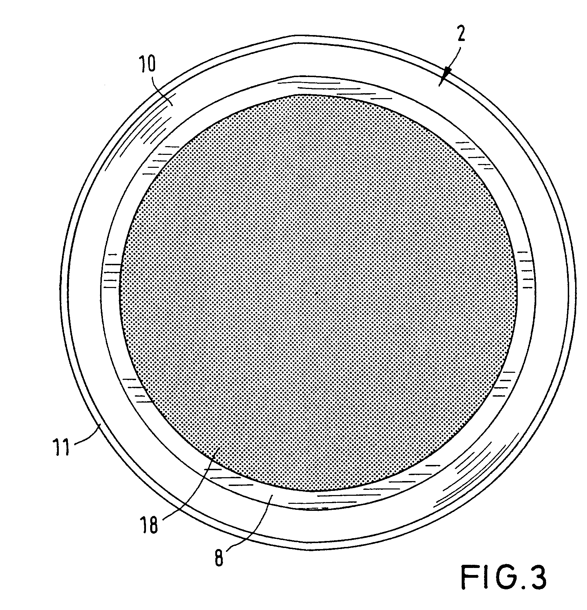

Der Formboden 2 läßt sich problemlos als einstückiges Blechformteil aus einem Stahlblech von 0,4 bis 1 mm, vorzugsweise von etwa 0,5 bis 0,8 mm, herstellen. Er kann mit besonderem Vorteil aus einem rostfreien Stahl, also aus einem Edelstahl, gefertigt werden. Dabei wird auf die dem Backgut abgewandte Unterseite der Bodenfläche 7 eine hochhitzebeständige Beschichtung 18 aufgebracht, wie dies Fig. 3 erkennen läßt. Diese Beschichtung weist eine dunkle Farbe, z.B. eine schwarze, dunkelgraue, dunkelblaue oder dunkelrote Farbe auf, so daß die Backofenhitze von der Unterseite des Edelstahl-Formbodens 2 nicht reflektiert, sondern aufgenommen und an das in der Form befindliche Backgut weitergegeben wird. Es hat sich gezeigt, daß mit einer solchen unterseitigen Beschichtung gute Backergebnisse erreicht werden können, wenn der Formboden aus Edelstahl gefertigt wird. Die Oberfläche bzw. die Sichtfläche des Formbodens 2 wird zweckmäßig auf Hochglanz poliert. Für die Beschichtung 18 können die für Backformen gebräuchlichen Beschichtungsstoffe verwendet werden, z.B. temperaturbeständige polymere Beschichtungssysteme, wie sie als sogenannte Backformenlacke oder auch als Antihaftbeschichtungen bei Backformen gebräuchlich sind.

Es besteht aber auch die Möglichkeit den Formboden 2 an seiner Ober- und Unterseite mit einer Emaillierung zu versehen. Die dargestellte Gestaltung des Formbodens 2 ermöglicht eine einwandfreie Emaillierung.

Bei einer Springform, deren Formboden 2 in der oben beschriebenen Weise aus unterseitig beschichtetem Edelstahlblech gefertigt ist, kann auch der mit dem Spannverschluß versehene Formrand 3 aus Edelstahlblech hergestellt werden. Der Edenstahl-Formrand 3 wird dann an seiner dem Backgut abgewandten Seite, also an seiner Außenseite beschichtet, wie dies im Zusammenhang mit der Beschichtung 18 des Formbodens beschrieben ist. Andererseits kann bei einem Edelstahl-Formboden 2 der Formrand 3 aber auch in herkömmlicher Weise aus nicht-rostfreiem Stahlblech gefertigt und zumindest an der Innenseite mit einer Anti-Haftbeschichtung der üblichen Art versehen werden.

Es ist erkennbar, daß der Formboden 2 bei entferntem Formrand 3 als Kuchen- bzw. Tortenplatte und vielseitig auch als Servierplatte verwendbar ist. In der Ausführung aus Edelstahl erhält er ein besonders ansprechendes, dokoratives Aussehen. Mit der Edelstahl-Ausführung der Springform und der nur einseitigen Beschichtung des Formbodens und gegebenenfalls auch des Formrandes wird gegenüber den herkömmlichen Springformen der Anteil an Beschichtungsmaterial drastisch gesenkt, was nicht zuletzt auch unter dem Gesichtspunkt der Umweltfreundlichkeit und der Entsorgung des Erzeugnisses vorteilhaft ist.

## Patentansprüche

1. Springform, bestehend aus einem Formboden (2) und einem diesen einspannenden Formrand (3) mit Spannverschluß (4), mit einer am Formboden (2) in dessen Umfangsbereich angeordneten umlaufenden Rille (6), in die der Formrand (3) mit seinem einen Stützbördel (14) aufweisenden Fuß einführbar ist, wobei der Rillenboden (8) gegenüber der das Backgut tragenden ebenen Bodenfläche (7) des Formbodens (2) nach unten versetzt ist und die die Rille (6) innenseitig begrenzende, vom Rillenboden (8) zur Bodenfläche (7) aufragende Rillenschulter (9) eine vom Formrand (3) umschlossene Formrand-Anlagefläche bildet, während die die Rille (6) außenseitig begrenzende Rillenschulter einen schräg nach außen und nach oben aufragenden Bodenrand (10) bildet, dessen Scheitel (12) in Höhe der Oberseite der Bodenfläche (7) oder tiefer als diese liegt, **dadurch gekennzeichnet, daß** der Stützbördel (14) am Fuß des Formrandes (3) als eine gegenüber diesem nach außen gerichtete Umbördelung ausgebildet ist, daß die Bodenfläche (7) an ihrem Umfang über eine nach Art einer nach außen gedrückten Sicke ausgebildete Rundung (15) in die vertikalstehende innenseitige Schulter (9) der Rille (6) übergeht, und daß der Formrand (3) oberhalb seines Stützbördels (14) eine der Rundung (15) angepaßte, sich im Spannzustand des Formrandes (3) dichtend gegen die Rundung (15) legende und anschmiegende Sicke (16) aufweist.

2. Springform nach Anspruch 1, **dadurch gekennzeichnet, daß** der schrägstehende Bodenrand (10) an seinem freien oberen Ende einen nach unten gerichteten, vorzugsweise als offene Bördelrolle ausgebildeten Griffbördel (11) aufweist.

3. Springform nach Anspruch 2, **dadurch gekennzeichnet, daß** die Freihöhe (H) des Griffbördels (11) über der vom Rillenboden (8) gebildeten Standfläche des Formbodens (2) etwa gleich 1/2 bis 3/4 der Tiefe der Rille (6) ist.

4. Springform nach einem der Ansprüche 1 bis 3, **dadurch gekennzeichnet, daß** die innere, vertikalstehende Rillenschulter (9) über eine Rundung (13) in den horizontalen Rillenboden (8) übergeht, wobei der Rillenboden (8) eine Breite hat, die größer ist als der Durchmesser des Stützbördels (14), der sich im Spannzustand des Formrandes (3) der genannten Rundung (13) eng anschmiegt.

5. Springform nach einem der Ansprüche 1 bis 4, **dadurch gekennzeichnet, daß** der Bodenrand (10) vom Rillenboden (8) zum Scheitel (12) hin geradlinig unter einem Winkel von etwa 20° - 30°, vorzugsweise etwa 25°, ansteigt.

6. Springform nach einem der Ansprüche 1 bis 5, **dadurch gekennzeichnet, daß** der Formboden (2) aus einem einstückigen Blechformteil mit einer Blechdicke von 0,4 bis 1 mm, vorzugsweise 0,5 bis 0,8 mm, besteht.

7. Springform nach einem der Ansprüche 1 bis 6, **dadurch gekennzeichnet, daß** der Formboden (2) aus einem Edelstahlboden besteht, der auf der Oberseite unbeschichtet ist und auf der Unterseite seiner Bodenfläche (7) eine Beschichtung aus einem dunkelfarbigen hochhitzebeständigen Beschichtungsstoff, wie vor allem aus einem temperaturbeständigen polymeren Beschichtungssystem, aufweist.

8. Springform nach Anspruch 6, **dadurch gekennzeichnet, daß** der Formboden (2) beidseitig eine Emailbeschichtung aufweist.

9. Springform nach Anspruch 7 oder 8, **dadurch gekennzeichnet, daß** der Formrand (3) aus Edelstahl besteht und an seiner dem Backgut abgewandten Außenseite eine Beschichtung aus einem dunkel farbigen hochhitzebeständigen Beschichtungsstoff, wie vor allem aus einem temperaturbeständigen polymeren Beschichtungssystem, aufweist.

## Claims

1. Springform, comprising a form bottom (2) and an upright rim (3) fastened to the former by means of a clamp (4), and having a surrounding groove (6) arranged in the circumferential area of said form bottom (2) in such a way that the upright rim (3) can be inserted into said groove with a foot means exhibiting a reinforcing bead (14) whereby the groove bottom (8) is offset downwardly from the level bottom surface (7) of the form bottom (2) carrying the baking product, and the groove shoulder (9) defining the inside of said groove (6) and projecting front the groove bottom (8) to the bottom surface (7) forms a rim support surface enclosed by the upright rim (3), while the groove shoulder defining the outside of the groove (6) forms a bottom edge (10) extending outwardly and upwardly at an angle, the apex (12) of said edge being located level with, or lower than, the upper side of the bottom surface (7) at the level of the latter, **characterized in** that the reinforcing bead (14), near the foot of the upright rim (3), is in the form of a crease directed outwardly with respect to the latter; that the transition from the bottom surface (7) to the vertical inside shoulder (9) of tile groove (6) is via a curvature (15) in the form of a pressed-out canalure; and that the upright rim (3), above its reinforcing bead (14), exhibits a canalure (16) which is adapted to fit said curvature (15) and is brought into sealing engagement with, and pressed firmly against, said curvature (15) when the upright rim (3) is clamped shut.

2. Springform as set forth in claim 1, **characterized in** that the bevel edge (10) of the form bottom, near its free upper end, exhibits a downwardly directed grip bead (11) which is preferably in, the form of an open-bead roll.

3. Springform as set forth in claim 2, **characterized in** that the free height (H) of said grip bead (11) above the support surface of the form bottom (2) formed by the groove bottom (8) is approximately equal to 1/2 to 3/4 of the depth of the groove (6).

4. Springform as set forth in any of claims 1 through 3, **characterized in** that the inner, vertical groove shoulder (9) continues into the horizontal groove bottom (8) via a curvature (13), the width of said groove bottom (8) exceeding the diameter of the reinforcing bead (14) closely pressed against said curvature (13) when the upright rim (3) is clamped shut.

5. Springform as set forth in any of claims 1 through 4, **characterized** in that the edge (10) of the form bottom raises in a straight line from the groove bottom (8) to the apex (12) at an angle of approx. 20 - 30 degrees, but preferably approx. 25 degrees.

6. Springform as set forth in any of claims 1 through 5, **characterized** in that the form bottom (2) consists of an integral sheet metal moulding of gauge 0.4 to 1 mm, but preferably 0.5 to 0.8 mm.

7. Springform as set forth in any of claims 1 through 6, **characterized** in that the form bottom (2) consists of a high-grade steel bottom with an uncoated top side and the underisde of its bottom surface (7) carrying a coating made of a dark-coloured, highly heat resistant coating material such as, primarily, a temperature resistant polymer coating system.

8. Springform as set forth in claim 6, **characterized** in that the form bottom (2) carries an enamel coating on both sides.

9. Springform as set forth in any of claims 7 or 8, **characterized** in that the upright rim (3) is made of high-grade steel and carries a coating made of a dark-coloured, highly heat resistant coating material such as, primarily, a temperature resistant polymer coating system, on its outside facing away from the baked product.

## Revendications

1. Moule élastique, constitué par un fond (2) et un bord de moule (3) qui enserre ce fond et comporte un système de fermeture à serrage (4), comportant une nervure circonférentielle (6) qui est disposée sur le fond (2) du moule, dans sa partie circonférentielle, et dans laquelle le bord (3) du moule peut être inséré par son pied qui possède un rebord d'appui (14), et dans lequel la base de la nervure est décalée vers le bas par rapport à la surface plane (7), qui supporte le matériau arrière, du fond (2) du moule, et l'épaulement (9) de la nervure, qui limite sur le côté intérieur la nervure (6) et s'élève depuis la base (8) de la nervure en direction de la surface (7) du fond, forme une surface d'appui du bord du moule (3), qui est entouré par ce bord, tandis que l'épaulement de la nervure, qui limite la nervure (6) sur le côté extérieur, forme un bord (10) du fond, qui fait saillie obliquement vers l'extérieur et vers le haut et dont le sommet (12) est situé à la hauteur de la face supérieure de la surface (7) du fond ou à un niveau plus bas que cette surface, caractérisé en ce que le rebord d'appui (14) est agencé, au niveau du pied du bord (3) du moule, sous la forme d'un rebord dirigé vers l'extérieur par rapport à ce bord du moule, que la surface (7) du fond se prolonge, au niveau de sa circonférence, par l'intermédiaire d'un arrondi (15) qui est agencé à la manière d'une moulure repoussée vers l'extérieur par emboutissage, par l'épaulement vertical (9), situé sur le côté intérieur, de la nervure (6) et que le bord (3) du moule possède, au-dessus de son rebord d'appui (14), une moulure (16), qui est adaptée à l'arrondi (15), s'applique contre et épouse la forme de l'arrondi (15) lorsque le bord (3) du moule est à l'état serré.

2. Moule élastique selon la revendication 1, caractérisé en ce que le bord oblique (10) du fond possède, au niveau de son extrémité supérieure libre, un rebord de préhension (11), qui est dirigé vers le bas et est agencé de préférence sous la forme d'un enroulement ouvert de bordage.

3. Moule élastique selon la revendication 2, caractérisé par le fait que la hauteur libre (H) du rebord de préhension (11) au-dessus de la surface d'appui du fond (2) du moule, formée par la base (8) de la nervure, est comprise approximativement entre 1/2 et 3/4 de la profondeur de la nervure (6).

4. Moule élastique selon l'une des revendications 1 à 3, caractérisé en ce que l'épaulement vertical intérieur (9) de la nervure se prolonge, par l'intermédiaire d'un arrondi (13), par la base horizontale (8) de la nervure, la base (8) de la nervure ayant une largeur qui est supérieure au diamètre du rebord d'appui (14), qui épouse étroitement ledit arrondi (13) lorsque le bord (3) du moule est à l'état serré.

5. Moule élastique selon l'une des revendications 1 à 4, caractérisé en ce que le bord (10) du fond remonte selon une disposition rectiligne depuis la base (8) de la nervure jusqu'au sommet (12) en faisant un angle égal approximativement à 20° - 30° et égal de préférence à environ 25°.

6. Moule élastique selon l'une des revendications 1 à 5, caractérisé en ce que la base (2) du moule est formée par une pièce de forme en tôle monobloc possédant une épaisseur comprise entre 0,4 et 1 mm et de préférence entre 0,5 et 0,8 mm.

7. Moule élastique selon l'une des revendications 1 à 6, caractérisé en ce que le fond (2) du moule est constitué par un fond en acier traité, qui ne comporte aucun revêtement sur sa face supérieure et comporte, sur la face inférieure de la surface (7) de son fond, un revêtement formé d'un matériau de revêtement de coloration sombre, qui résiste à une chaleur élevée, tel que essentiellement un Système de revêtement polymérique résistant à la température.

8. Moule élastique selon la revendication 6, caractérisé en ce que le fond (2) du moule comporte, des deux côtés, un revêtement d'émail.

9. Moule élastique selon la revendication 7 ou 8, caractérisé en ce que le bord (3) du moule est réalisé en acier traité et comporte, au niveau de sa face extérieure, tournée à l'opposé du matériau de renfort, un revêtement constitué par un matériau d'étanchéité de coloration sombre, qui résiste aux hautes températures, tel que sur tout un système de revêtement polymérique résistant à la température.
